Europäisches Patentamt

(19) **European Patent Office**

Office européen des brevets

(11) Veröffentlichungsnummer: **0 073 261**
**B1**

(12) **EUROPÄISCHE PATENTSCHRIFT**

(45) Veröffentlichungstag der Patentschrift:
13.11.85

(51) Int. Cl.⁴: **G 21 F 9/00**

(21) Anmeldenummer: **81106782.6**

(22) Anmeldetag: **31.08.81**

(54) Verfahren zum Abtrennen von Cäsiumionen aus Lösungen unter Verwendung einer Adduktverbindung in fester Form aus einem macrocyclischen Polyether und einer anorganischen Heteropolysäure.

(43) Veröffentlichungstag der Anmeldung:
09.03.83 Patentblatt 83/10

(45) Bekanntmachung des Hinweises auf die Patenterteilung:
13.11.85 Patentblatt 85/46

(84) Benannte Vertragsstaaten:
**BE DE FR GB IT**

(56) Entgegenhaltungen:
**CS - A - 165 751**

**ANALYTICAL CHEMISTRY, Band 52, 1980, Seiten 1115-1119, Washington D.C., USA,L.A. FERNANDO et al.: "Ion-exchange properties of crown ether-phosphomolybdic acid precipitates"**
**Angewandte Chemie 84 (1972), nr. 1, S. 16-26**

(73) Patentinhaber: **Kernforschungszentrum Karlsruhe GmbH, Weberstrasse 5, D-7500 Karlsruhe 1 (DE)**

(72) Erfinder: **Blasius, Ewald, Prof. Dr. Ing, Leberstrasse 6, D-6600 Saarbrücken (DE)**
Erfinder: **Nilles, Karl-Heinz, Dipl.-Chem., Schüren 32, D-6670 St. Ingbert (DE)**

## Beschreibung

Die Erfindung betrifft ein Verfahren zum Abtrennen von Cäsiumionen aus wäßrigen Lösungen unter Verwendung einer Adduktverbindung in fester Form, bestehend aus einem Kronenether und einer anorganischen, in stark saurem und oxidierendem Medium beständigen Heteropolysäure.

Die Aufarbeitung und Verfestigung von mittelradioaktiven, wäßrigen Abfällen (MAW), wie sie beispielsweise als Abfall-Lösungen, -Konzentrate oder -Schlämme bei der Wiederaufarbeitung bestrahlter Kernbrenn- und/oder -Brutstoffe anfallen, wird durch die Gegenwart geringer Mengen der Cäsiumisotope $^{134}$Cs und $^{137}$Cs erschwert. Cäsium verdampft merklich beim Verglasen von MAW und wird auch aus den für die Endlagerung bestimmten Verfestigungsprodukten (Glas-, Zement- und Bitumenblöcke) leicht ausgelaugt. Eine selektive Abtrennung des Cs würde die Weiterverarbeitung mittelaktiver Abfälle erheblich erleichtern. Darüber hinaus erhielte man bei gleichzeitiger Abtrennung von $^{90}$Sr aus dem MAW niedrigradioaktive, wäßrige Abfälle (LAW = low active waste), da nach relativ kurzer Abklingzeit praktisch die gesamte Aktivität von den verhältnismäßig langlebigen Radionukliden $^{137}$Cs ($t_{1/2}$ = 30 a) und $^{90}$Sr ($t_{1/2}$ = 26 a) herrührt.

Die Abtrennung von Cs und Sr erfolgte nach den bekannten Verfahren hauptsächlich durch Mitfällungsreaktionen. Die Mitfällung lieferte für Sr und Cs jedoch keine befriedigenden DF-Werte*). Deshalb wurden andere Verfahren gesucht, die eine selektive Abtrennung der beiden Radionuklide — gemeinsam ode einzeln — ermöglichen.

Die bisher für Cs$^+$-Ionen entwickelten Extraktionsverfahren sind für die Abtrennung von Cs$^+$ aus einem typischen MAW, wie ihn nachstehende Tabelle zeigt, mit seinem hohen Gehalt an NaNO$_3$ und freier Salpetersäure nicht geeignet.

| Inhaltsstoffe (stark saurer MAW) | Konzentration g/dm$^3$ |
| --- | --- |
| Salpetersäure | 64 (1 mol/dm$^3$) |
| Natriumnitrat | 42,5 (0,5 mol/dm$^3$) |
| Uran | 1,0 |
| Blei | 0,8 |
| Calcium | 0,2 |
| Magnesium | 0,2 |
| Eisen | 0,15 |
| Ruthenium | 0,07 |
| Kalium | 0,05 |
| Zink | 0,05 |
| Kupfer | 0,04 |
| Mangan | 0,02 |
| Chrom | 0,02 |
| Nickel | 0,01 |
| Zirkonium | 0,005 |
| Cäsium | 0,004 |
| Cer | 0,004 |
| Strontium | 0,002 |

*) DF = Dekontaminations-Faktor

(Fortsetzung)

| Inhaltsstoffe (stark saurer MAW) | Konzentration g/dm³ |
|---|---|
| Antimon | 0,002 |
| Niob | 0,001 |

Diese Verfahren verwenden meist organische Reagenzien, welche entweder der organischen oder der zu extrahierenden wäßrigen Phase zugesetzt werden. Diese Reagenzien würden jedoch bei Kontakt mit dem in der Tabelle in seiner wesentlichen Zusammensetzung beschriebenen MAW entweder hydrolytisch oder oxidativ zerstört oder durch Protonierung unwirksam gemacht. Auch die in diesem Milieu sehr beständigen und $Cs^+$-selektiven Heteropolysäuren, die in Nitrobenzol als Lösungsmittel eingesetzt werden (z. B. 12-Molybdatophosphorsäure, HPMo) sind in dieser Form für die kontinuierliche $Cs^+$-Extraktion aus dem als Beispiel beschriebenen MAW nicht verwendbar, da sie wegen ihrer guten Wasserlöslichkeit stark ausbluten. Sie müßten ständig ersetzt werden.

Das im Falle der HPMo dabei in größeren Mengen in den MAW gelangende Molybdän würde zudem die Weiterverarbeitung des MAW (Verglasung) stören. Schließlich besteht, abhängig von der $Cs^+$-Konzentration des MAW und der Heteropolysäurekonzentration in der Nitrobenzolphase, die Gefahr der Niederschlagsbildung, was zu erheblichen Störungen in einer kontinuierlich arbeitenden Anlage führen könnte.

Im Gegensatz zu den bisherigen Extraktionsmitteln für $Cs^+$ besitzen Dienzo-Kronenether eine sehr geringe Wasserlöslichkeit und eignen sich somit, wenigstens zum Teil, für den Einsatz im kontinuierlichen Extraktionsbetrieb.

Da Kronenether Neutralliganden darstellen, wird bei der Extraktion auch das Anion mitextrahiert. Dieses hat jedoch einen entscheidenden Einfluß auf den Extraktionskoeffizienten. So lassen sich einfache Cäsiumsalze (Chlorid, Nitrat) mit Kronenethern in polaren Lösungsmitteln nur sehr schlecht extrahieren (mit Ausnahme von Nitromethan- und Nitrobenzol-Lösungen). Man ging deshalb dazu über, Kronenethern mit bekannten $Cs^+$-spezifischen Ragenzien zu kombinieren (diese enthalten voluminöse, polarisierbare Anionen). Dies geschah bisher in der Form, daß man diese Reagenzien der zu extrahierenden wäßrigen Phase zusetzte (meistens Pikrinsäure) und mit Kronenethern (meist DB-18-C-6 bzw. Dicyclohexyl-18-C-6) in polaren Lösungsmitteln (meist Nitrobenzol) extrahierte (Angewandte Chemie, 84 (1972), Nr. 1, S. 16—26).

J. Rais und P. Selucký schlugen zur Abtrennung von $Cs^+$ aus nuklidhaltigen Lösungen zwei Extraktionssysteme vor, welche DB-18-C-6 in Verbindung mit Dipicrylamin bzw. Natriumtetraphenylborat verwenden (CS-PS 149 403, CS-PS 149 404).

Diese Verfahren sind jedoch beschränkt auf alkalische $Cs^+$-Lösungen (pH 11 bis 13): Dipicyrlamin wird im sauren Bereich protoniert, Natriumtetraphenylborat hydrolysiert. Die beiden Verfahren funktionieren nur gut in Abwesenheit größerer $Na^+$- und $K^+$-Mengen.

Die gleichen Autoren haben ferner ein Adduct aus DB-18-C-6 und 12-Wolframatophosphorsäure hergestellt (CS-PS 165 751), welches eine säulenchromatographische Abtrennung von $Cs^+$ aus Wastelösungen erlaubt. Jedoch wirken sich auch hier größere $Na^+$- und $K^+$-Mengen störend aus.

Bei Untersuchungen des Ionenaustauschverhaltens an Kronenether-Phosphormolybdänsäure-Fällungen, unter anderen an Benzo-15-Krone-5-Molybdatophosphorsäure-Sorptionsmittel, wurde festgestellt, daß die in derselben Weise hergestellten und die gleiche Stöchiometrie aufweisenden Sorbentien bemerkenswert unterschiedliche Verteilungskoeffizienten $K_d$ besaßen, so daß eine Reproduzierbarkeit der Ergebnisse nicht erhalten werden konnte (Analytical Chemistry, Vol. 52, No. 7 (June, 1980), S. 1115 bis 1119). Insbesondere war das B-15-C-5-HPMo-Sorptionsmittel (in fester Form) nicht in der Lage, Alkalikationen, darunter Cäsiumionen, aus wäßrigen Lösungen zu einem merklichen Betrag zu entfernen.

Gemäß CS-PS 165 751, bzw. J. Radioanal. Chem. 35 (1977) 351, hergestellte Adducte von DB-18-C-6 mit 12-Molybdato- bzw. 12-Wolframatophosphorsäure lieferten im Satzversuch mit dem als Beispiel beschriebenen MAW $K_d$-Werte von 5 bzw. 9 $\left[\dfrac{cm^3}{g}\right]$.

Für die Verteilung eines Metallions zwischen einer festen und einer flüssigen Phase gilt:

$$K_d = \frac{\text{Totalkonzentration pro g trockener Austauscher}}{\text{Totalkonzentration pro cm}^3 \text{ der überstehenden Lösung}}.$$

Da der $K_d$-Wert in der Praxis durch Vergleich der Konzentration (hier: Impulsrate in 5 ml Lösung) vor und nach dem Satzversuch ermittelt wird, ergibt sich für die Berechnung des $K_d$-Wertes folgende Formel:

$$K_d = \frac{lpm_{vorher}\,(w\ddot{a}\beta r.) - lpm_{nachher}\,(w\ddot{a}\beta r.)}{lpm_{nachher}\,(w\ddot{a}\beta r.)} \cdot BF,$$

$$BF = Batchfaktor = \frac{Volumen\ der\ w\ddot{a}\beta rigen\ Phase\ (cm^3)}{Austauschermenge\ (g)}.$$

Dagegen erhielten wir bereits allein mit den anorganischen Bestandteilen dieser Addukte in ihrer NH$_4$+-Form (12-Ammoniummolybdatophosphat = AMP bzw. 12-Ammoniumwolframatophosphat = AWP) im genannten MAW $K_d$-Werte um 100 000 bzw. 350 000 $\left[\dfrac{cm^3}{g}\right]$.

AMP und AWP sind ihrerseits jedoch für die säulenchromatographische Abtrennung von Cs$^+$ aus o.g. MAW wenig geeignet, da sie sowohl auf Asbest als auch auf Kieselgel oder organischen Polymeren als Trägermaterial ausbluten.

Der Erfindung liegt die Aufgabe zugrunde, ein verbessertes Verfahren zur Abtrennung von Cäsiumionen aus wäßrigen Lösungen unter Verwendung einer Adduktverbindung in fester Form, bestehend aus einem Kronenether und einer anorganischen, in stark saurem und oxidierendem Medium beständigen Heteropolysäure bereitzustellen, das sowohl im diskontinuierlichen als auch im kontinuierlichen Betrieb störungsfrei, selbst bei Anwesenheit größerer Natrium- und Kaliumionen-Mengen und ohne Beschränkung auf bestimmte pH-Bereiche der Ausgangslösungen, mit gutem Erfolg ausgeführt werden kann. Das Verfahren soll für die Ionenaustausch-Chromatographie gut geeignet sein und hohe Wirksamkeit besitzen.

Die Aufgabe wird gemäß der Erfindung dadurch gelöst, daß als Adduktverbindungen solche aus

Benzo-15-krone-5 (B-15-C-5) oder
Dibenzo-21-krone-7 (DB-21-C-7) oder
Dibenzo-30-krone-10 (DB-30-C-10) mit
12-Molybdatophosphorsäure (HPMo) oder
12-Wolframatophosphorsäure (HPW) oder
12-Molybdatokieselsäure (HSiMo) oder
12-Wolframatokieselsäure (HSiW) oder
deren Na-, K-, Tl- oder NH$_4$-Salzen

verwendet werden, wobei im Fall der Adduktverbindungen Benzo-15-krone-5 mit einer Heteropolysäure bzw. einem Heteropolysäure-Salz das Molverhältnis Benzo-15-krone-5 zu Heteropolysäure bzw. -Salz 0,5 : 1 bis 2 : 1 ist.

In einer vorteilhaften Ausführung der Erfindung liegen die Adduktverbindungen in Form einer festen Ionenaustauscher-Phase, eingebaut in porösem Kieselgel oder in porösem Aluminiumoxid vor.

Zur Durchführung des erfindungsgemäßen Verfahrens wird die Cäsiumionen enthaltende wäßrige Lösung mit der festen Adduktverbindung oder mit der festen Ionenaustauscher-Phase des Kieselgels oder des Al$_3$O$_3$ in Kontakt gebracht, wobei die feste Phase mit Cäsiumionen beladen wird, und die cäsiumfreie oder nur noch geringe Mengen Cäsium enthaltende wäßrige Lösung von der festen Phase abgetrennt. Eine besonders günstige Ausführung des Verfahrens gemäß der Erfindung ist dadurch gekennzeichnet, daß die festen Adduktverbindungen ein Molverhältnis Kronenether zu Heteropolysäure bzw. Heteropolysäuresalz im Bereich von 0,5 : 1 bis 2 : 1 aufweisen und die entweder durch

a) Lösen der Einzelkomponenten im Molverhältnis-Bereich Kronenether zu Heteropolysäure bzw. -Salz von 0,5 : 1 bis 2,0 : 1 in Aceton allein oder in einer Aufschlämmung von Kieselgel oder Al$_2$O$_3$ in Aceton,
b) Abziehen des Lösungsmittels Aceton und Verdampfen der Lösungsmittelreste

oder durch

a) Lösen eines vorgefertigten, festen Kronenether-Heteropolysäure- bzw. -Salz-(3 : 1)-Adduktes in Aceton allein oder in einer Aufschlämmung von Kieselgel oder Al$_2$O$_3$ in Aceton,
b) Zugabe von Heteropolysäure bzw. -Salz bis zu einem Gesamtmolverhältnis Kronenether zu Heteropolysäure bzw. -Salz im Bereich von 0,5 : 1 bis 2,0 : 1 in der Lösung bzw. Aufschlämmung,
c) Abziehen des Lösungsmittels Aceton und Verdampfen der Lösungsmittelreste

erhalten werden.

Jede andere Darstellungsmethode, sei es eine Zwei-Phasen-Reaktion (Rais/Selucký) oder sei es durch Fällung aus homogener Lösung (Dioxan/Wasser), führt stets zu einem (3 : 1)-Addukt. Nur mit dieser Methode sind Addukte mit beliebigen (in gewissen Grenzen) Kronenether zu Heteropolysäure-Verhältnissen möglich. Einmal hergestellte (3 : 1)-Addukte lassen sich z. B. auf diese Weise nachträglich in (1 : 1)-Addukte umwandeln.

Die zur Durchführung des erfindungsgemäßen Verfahrens verwendbaren Adduktverbindungen in fester Form bringen u. a. die Vorteile mit sich, daß sie

— in stabiler Form gelagert werden können,
— gut dosierbar sind,
— direkt in der gewünschten (M(I)-Beladungsform zur Verwendung kommen können und
— leicht zu handhaben sind.

Beim Versuch, das Heteropolysäureaddukt DB-21-C-7/HPMo gemäß Rais/Selucký, J. Radioanal. Chem. 35 (1977) 351; CS-PS 165 751 (1976) zu isolieren (das Rais et al-Verfahren zur Addukt-Herstellung besteht darin, daß eine Lösung von Kronenether, speziell DB-18-C-6, in Dichlormethan mit einer Lösung von HPMo bzw. HPW in 2 mol/l $HNO_3$ geschüttelt wird), erhält man nur eine klebrig-zähe dunkelbraune Masse (im Vergleich dazu liefert die Umsetzung mit DB-18-C-6 ein mikrokristallines Produkt). Nach der weiteren Aufarbeitung des zähen Produktes beträgt die Ausbeute lediglich 50%.

Einer im Rahmen der vorliegenden Erfindung ausgearbeiteten, beispielhaften Vorschrift zufolge, läßt sich das Addukt DB-21-C-7/HPMo jedoch quantitativ isolieren, wenn man die Herstellung in homogener Phase durchführt.

Herstellung der Addukte in fester Form (Beispiele): In dieser und in den folgenden Vorschriften wurden als Chemikalien verwendet:

$H_3[PMo_{12}O_{40}] \cdot x H_2O$ mit $x \approx 29$ und
$H_3[PW_{12}O_{40}] \cdot x H_2O$ mit $x \approx 24$ der Firma Merck;
DB-21-C-7, hergestellt gemäß einer verbesserten Arbeitsvorschrift auf der Grundlage von C. J. Pedersens Arbeiten (J. Am. Chem. Soc. 89 (1967) 7017).

1a) 3 : 1 — Addukt (DB-21-C-7/HPMo [3 : 1])

Man löst 0,5 g DB-21-C-7 (0,00124 mol) in 40 cm³ Aceton, des weiteren 0,97 g HPMo · 29 $H_2O$ in 20 cm³ Aceton (Verhältnis 3 : 1 genau einhalten). Man vereinigt beide Lösungen und zieht das Lösungsmittel im Vakuum ab, wobei bis 50° C erwärmt werden kann. Man erhält auf diese Weise ein braungrünes lockeres Produkt (1,25 g), welches die gleichen Extraktionseigenschaften besitzt wie ein durch direktes Auflösen der Einzelkomponenten hergestelltes Addukt.

1b) 4 : 1 — Addukt (DB-21-C-7/HPMo [4 : 1]).

Gleiche Vorschrift wie 1a), statt 0,5 g werden 0,67 g DB-21-C-7 (,00165 mol) eingesetzt. Man erhält dabei ein gelb-braunes Produkt von noch geringerer Schüttdichte.

Die gemäß den Vorschriften 1a) und 1b) gewonnenen 3 : 1- bzw. 4 : 1-Addukte können im Mörser leicht zu Produkten größerer Schüttdichte pulverisiert werden.

Die o.g. Herstellung läßt sich auch in Gegenwart von Kieselgel durchführen, wobei man für die Ionenaustauschchromatographie geeignete und im Gegensatz zur Extraktionschromatographie lösungsmittelfreie, feste Phasen erhält.

1c) DB-21-C-7/NH₄PW [1 : 1] auf Kieselgel 100, w/w = 1 : 1.

0,5 g DB-21-C-7 und 4,1 g HPW · 24 $H_2O$ werden in 10—15 cm³ Aceton unter leichtem Erwärmen gelöst. Man fügt 4,2 g mit konz. HCl gereinigtes Kieselgel 100 der Korngröße 63—200 μm (Merck) hinzu, bedeckt das Gefäß mit einem Papiertuch und zieht das Lösungsmittel im Vakuumtrockenschrank bei 50°C ab. Anschließend wird der Austauscher durch Behandeln mit 3 mol/l NH₄NO₃-Lösung in die Ammoniumform überführt. Das Gewichtsverhältnis von Kieselgel zu reinem 1 : 1-Addukt beträgt ~1 : 1. Die Cs⁺-Kapazität bei pH = 7 beträgt 0,29 mmol Cs⁺/g trockener Austauscher, was 2/3 der theoretischen Kapazität entspricht.

Sind die DB-21-C-7/Heteropolysäure-Addukte für den Einsatz in säulenchromatographischen Verfahren mit oder ohne Kieselgel als Träger vorgesehen, so kann man für die Abtrennung von Cs⁺ aus stark sauren MAW-Lösungen nicht die stabileren 3 : 1-Addukte verwenden. Diese zeigen nämlich, in fester Form eingesetzt (Fester Austauscher), im Gegensatz zu den in Nitrobenzol gelösten 3 : 1-Addukten (Flüssige Austauscher), eine geringe Extraktionsfähigkeit in stark sauren, viel Na⁺ enthaltenden Lösungen, so daß in dem als Beispiel aufgeführten MAW nur $K_d$-Werte bis 40 erzielt werden können. Auch das 2 : 1-Addukt liefert nur $K_d$-Werte bis 150 [cm³/g].

Verringert man dagegen das DB-21-C-7 : Heteropolysäure-Verhältnis auf 1 : 1, so steigt der $K_d$-Wert sprunghaft auf Werte um 50 000 cm³/g.

Jedoch besitzen bei den 1 : 1-Addukten nur die K⁺- und NH₄⁺-Formen ausreichende Stabilität. Die H⁺-Form geht bei Dauerbehandlung mit dem erwähnten MAW allmählich durch Abstoßen überschüssige Heteropolysäure in das stabile 3 : 1-Addukt über.

2. Das DB-21-C-7/HPMo-Addukt läßt sich auch durch eine Fällungsreaktion gewinnen: Man läßt eine Lösung von 0,5 g DB-21-C-7 in 20 cm³ Dioxan unter Rühren in eine Lösung von 1,3 g HPMo · 29 $H_2O$ in 200 cm³ 0,5 mol/l $HNO_3$ fließen, wobei sich ein voluminöser Niederschlag absetzt. Dieser wird über einen Büchnertrichter abgetrennt, zunächst mit 0,5 mol/l $HNO_3$, schließlich mit $H_2O$ gewaschen. Trocknen bei 50° C im Vakuum.

3. Einer weiteren Vorschrift zufolge lassen sich erstmals auch die übrigen Beladungsformen der Heteropolysäureaddukte als mikrokristalline Produkte auf direktem Wege isolieren. Gemäß der nachstehenden allgemeinen Arbeitsvorschrift, demonstriert am Beispiel der HPMo, können die $Na^+$-, $K^+$-, $NH_4^+$- und $Tl^+$-Formen hergestellt werden:
Man gießt eine Lösung von 1,0 g HPMo · 29 $H_2O$ in 10 cm³ $H_2O$ in eine Lösung von 0,5 g DB-21-C-7 in 20 ml Dioxan, wobei man nach kurzem Umrühren eine klare Lösung erhält. Unter Rühren läßt man 5 cm³ der entsprechenden kaltgesättigten M(I)-Nitrat-Lösung innerhalb von 1 min zufließen, wobei ein gelber, voluminöser Niederschlag ausfällt. Man läßt noch 1/2 h weiterrühren und nutscht den Niederschlag anschließend über einen Büchner-Trichter ab, wäscht zunächst mit 50 cm³ der entsprechenden 0,5 mol/l M(I)-Nitratlösung, schließlicch mit 20 cm³ $H_2O$. Die $K^+$-, $NH_4^+$- und $Tl^+$-Formen werden bei 110°C, die $Na^+$-Form bei 90° C getrocknet. Man erhält gelbe bis ockergelbe Pulver in quantitativer Ausbeute: ca. 1,3 g.

Gemäß den Vorschriften 1a bis c, 2 und 3 können alle übrigen DB-21-C-7/Heteropolysäure-Addukte sowie auch Addukte mit anderen Kronenethern hergestellt werden.

Die festen Addukte können direkt (als solche) oder auf Kieselgel oder $Al_2O_3$ aufgezogen als Säulenmaterial in der Ionenaustauschchromatographie eingesetzt werden.

Im folgenden wird die Erfindung durch einige Durchführungsbeispiele näher erläutert. Die Erfindung ist jedoch auf die Beispiele nicht beschränkt.

## Beispiel 1

### Verwendung von festem DB-21-C-7/ $NH_4PW$ (1 : 1) im Satzversuch

0,05 g DB-21-C-7/$NH_4PW$ (1 : 1)-Pulver wurden mehrmals diskontinuierlich mit je 10 cm³ der o.g. MAW-Lösung jeweils 1 h in Kontakt gebracht. (Diese Operation führt man am besten in einem verschließbaren Zentrifugenglas durch, so daß man nach dem Zentrifugieren und Abhebern der überstehenden Lösung den Versuch in demselben Gefäß fortsetzen kann.) Der $K_d$-Wert für $Cs^+$ stieg zunächst von 35 000 bis zu einem Gleichgewichtswert von 190 000 und ging bis zum zehnten Verteilungsschritt auf einen Wert um 20 000 [cm3/g] zurück. (Vergleiche dazu tertiäres AWP: $K_d$ fällt von anfänglich 350 000 über 6000 beim 6. Verteilungsschritt auf 1200 [cm³/g] nach dem 10. Verteilungsschritt.)

## Beispiel 2

### Verwendung von festem DB-21-C-7/$NH_4PMo$ (1 : 1) Satzversuch

0,05 g DB-21-C-7/$NH_4PMo$ (1 : 1)-Pulver wurden, wie in Beispiel 1 beschrieben, im diskontinuierlichen Satzversuch mit MAW in Kontakt gebracht. Der $K_d$-Wert für $Cs^+$ stieg zunächst von 53 000 bis zu einem Gleichgewichtswert von 150 000 und fiel nach der 10. Verteilung auf 16 000 [cm³/g] (vgl. dazu tertiäres AMP: $K_d$ fällt von anfänglich 30 000 auf 500 [cm³/g] beim 3. Verteilungsschritt).

## Beispiel 3

### Verwendung von DB-21-C-7/$NH_4PW$ (1 : 1) auf Kieselgel

Es wurde gemäß Beispiel 1 verfahren. Zum Einstz kamen 0,1 g des festen Adduktes DB-21-C-7/$NH_4PW$ (1 : 1) auf gereinigtem Kieselgel 100 der Korngröße 63 bis 200 μm (Merck). (Lösungsmittelfreie feste Phase.) Der $K_d$-Wert fiel von anfänglich 17 000 auf 5000 [cm³/g] beim 6. Verteilungsschritt.

## Beispiel 4

### Verwendung von B-15-C-5/$NH_4PW$ [1 : 1] im diskontinuierlichen Satzversuch

Die Herstellung des Adduktes erfolgt analog der Herstellung des entsprechenden DB-21-C-7-Addukts (Beispiel 1). Um die Gleichgewichtseinstellung mit dem MAW zu beschleunigen, wurde es folgendermaßen vorbehandelt:

3 g B-15-C-5/NH$_4$PW[1 : 1]-Pulver wurden 3 h in 50 ml 1 mol/l HNO$_3$/0,5 mol/l NaNO$_3$-Lösung bei Raumtemperatur gerührt. Über einen Büchnertrichter abfiltriert, mit 0,5 mol/l HNO$_3$ und etwas H$_2$O gewaschen und bei 50°C getrocknet.

0,1 g des so vorbehandelten Addukts wurden zunächst mit 10 ml einer Lösung von 20 ppm Cs in 1 mol/l HNO$_3$ (dies entspricht dem 5fachen der im MAW enthaltenen Cs$^+$-Menge) 1 h geschüttelt. Dabei wurde ein K$_d$-Wert von 330 000 [cm$^3$/g] festgestellt. Danach wurde das Addukt, wie in Beispiel 1 beschrieben, im diskontinuierlichen Satzversuch mit jeweils 10 ml des simulierten MAW (4 ppm Cs) jeweils 1 h geschüttelt. Nach 5 Verteilungen lag der K$_d$-Wert bei 39 000 [cm$^3$/g].

## Beispiel 5

### Verwendung von DB-21-C-7/NH$_4$PW [1 : 1] im diskontinuierlichen Satzversuch

0,1 g DB-21-C-7/NH$_4$PW [1 : 1]-Pulver wurden mehrmals diskontinuierlich mit 10 ml eines simulierten MAW, dessen Zusammensetzung untenstehende Tabelle wiedergibt, jeweils 1 h geschüttelt.

Der K$_d$-Wert stieg von anfänglich 7800 [cm$^3$/g] auf 30 000 [cm$^3$/g] beim 4. Verteilungsschritt.

| Inhaltsstoff | Konzenration g/dm$^3$ |
|---|---|
| HNO$_3$ | 50,4 (0,8 mol/l) |
| NaNO$_3$ | 289 (3,4 mol/l) |
| Uran | 1,9 |
| Calcium | 1,6 |
| Magnesium | 0,8 |
| Eisen | 0,4 |
| Molybdän | 0,4 |
| Aluminium | 0,24 |
| Kupfer | 0,16 |
| Zink | 0,16 |
| Chrom | 0,08 |
| Kalium | 0,08 |
| Mangan | 0,08 |
| Nickel | 0,08 |
| Zirkonium | 0,08 |
| Ruthenium | 0,006 |
| Cäsium | 0,004 |
| Strontium | 0,001 |

## Patentansprüche

1. Verfahren zum Abtrennen von Cäsiumionen aus wäßrigen Lösungen unter Verwendung einer Adduktverbindung in fester Form, bestehend aus einem Kronenether und einer anorganischen, in stark saurem und oxidierendem Medium beständigen Heteropolysäure, dadurch gekennzeichnet, daß als Adduktverbindungen solche aus

Benzo-15-krone-5 (B-15-C-5) oder
Dibenzo-21-krone-7 (DB-21-C-7) oder
Dibenzo-30-krone-10 (DB-30-C-10) mit
12-Molybdatophosphorsäure (HPMo) oder
12-Wolframatophosphorsäure (HPW) oder
12-Molybdatokieselsäure (HSiMo) oder
12-Wolframatokieselsäure (HSiW) oder
deren Na-, K-, Tl- oder $NH_4$-Salzen

verwendet werden, wobei im Fall der Adduktverbindungen von Benzo-15-Krone-5 mit einer Heteropolysäure bzw. einem Heteropolysäure-Salz das Molverhältnis Benzo-15-Krone-5 zu Heteropolysäure bzw. -Salz 0,5 : 1 bis 2 : 1 ist.

2. Verfahren nach Anspruch 1, dadurch gekennzeichnet, daß die Adduktverbindungen in Form einer festen Ionenaustauscher-Phase, eingebaut in porösem Kieselgel oder in porösem Aluminiumoxid, vorliegen.

3. Verfahren nach Anspruch 1, dadurch gekennzeichnet, daß die Cäsiumionen enthaltende wäßrige Lösung mit der festen Adduktverbindung in Kontakt gebracht wird, wobei die feste Phase mit Cäsiumionen beladen wird, und die cäsiumfreie oder nur geringe Mengen Cäsium enthaltende wäßrige Lösung von der festen Phase abgetrennt wird.

4. Verfahren nach Anspruch 2, dadurch gekennzeichnet, daß die Cäsiumionen enthaltende wäßrige Lösung mit der festen Ionenaustauscher-Phase des Kieselgels oder des $Al_2O_3$ in Kontakt gebracht wird, wobei die feste Phase mit Cäsiumionen beladen wird, und die cäsiumfreie oder nur noch geringe Mengen Cäsium enthaltende wäßrige Lösung von der festen Phase abgetrennt wird.

5. Verfahren nach Anspruch 1, dadurch gekennzeichnet, daß die festen Adduktverbindungen ein Molverhältnis Kronenether zu Heteropolysäure bzw. Heteropolysäuresalz im Bereich von 0,5 : 1 bis 2 : 1 aufweisen.

6. Verfahren nach Anspruch 5, dadurch gekennzeichnet, daß als feste Adduktverbindungen im angegebenen Zusammensetzungs-Bereich solche verwendet werden, die durch

a) Lösen der Einzelkomponenten im Molverhältnis-Bereich Kronenether zu Heteropolysäure bzw. -Salz von 0,5 : 1 bis 2,0 : 1 in Aceton allein oder in einer Aufschlämmung von Kieselgel oder $Al_2O_3$ in Aceton,
b) Abziehen des Lösungsmittels Aceton und Verdampfen der Lösungsmittelreste

erhalten werden.

7. Verfahren nach Anspruch 1, dadurch gekennzeichnet, daß als feste Adduktverbindungen solche verwendet werden, die durch

a) Lösen eines vorgefertigten, festen Kronenether-Heteropolysäure- bzw. -Salz-(3 : 1)-Adduktes in Aceton allein oder in einer Aufschlämmung von Kieselgel oder $Al_2O_3$ in Aceton,
b) Zugabe von Heteropolysäure bzw. -Salz bis zu einem Gesamtmolverhältnis Kronenether zu Heteropolysäure bzw. -Salz im Bereich von 0,5 : 1 bis 2,0 : 1 in der Lösung bzw. Aufschlämmung,
c) Abziehen des Lösungsmittels Aceton und Verdampfen der Lösungsmittelreste

erhalten werden.

## Claims

1. Process for the extraction of cesium ions from aqueous solutions with an adduct compound in solid form containing a crown ether and an inorganic heteropoly acid component which is stable in strong acid and oxidizing medium, comprising employing as adduct compounds adducts of

benzo-15-crown-5 (B-15-C-5), or
dibenzo-21-crown-7 (DB-21-C-7), or
dibenzo-30-crown-10 (DB-30-C-10) with
12-molybdophosphoric acid (HPMo), or
12-tungstophosphoric acid (HPW), or
12-molybdosilicic acid (HSiW), or
12-tungstosilicic acid (HSiW), or
their Na, K, Tl or $NH_4$ salts

**0 073 261**

with the adduct compounds of benzo-15-crown-5 with a heteropoly acid and a heteropoly acid salt, respectively, having the molar ratio benzo-15-crown-5 to heteropoly acid and salt, respectively, of 0.5 : 1 to 2 : 1.

2. Process as defined in claim 1, wherein the adduct compounds are present in the form of a solid ion exchanger phase incorporated in porous silica gel or in porous aluminum oxide.

3. Process as defined in claim 1, wherein the aqueous solution containing the cesium ions is brought into contact with the solid adduct compound, the solid phase loaded with cesium ions, and the aqueous solution free of cesium or containing but little amounts of cesium separated from the solid phase.

4. Process as defined in claim 2, wherein the aqueous solution containing the cesium ions is brought into contact with the solid ion exchanger phase of the silica gel or $Al_2O_2$, with the solid phase loaded with cesium ions and the aqueous solution free of cesium or containing but little amounts of cesium separated from the solid phase.

5. Process as defined in claim 1, wherein the solid adduct compounds have a molar ratio of crown ether to heteropoly acid and heteropoly acid salts, respectively, in the range of 0.5 : 1 to 2 : 1.

6. Process as defined in claim 5, wherein the solid adduct compounds used in the range of compositions indicated are obtained by

(a) dissolving the individual components in the molar ratio range of crown ether to heteropoly acid and salt, respectively, of 0.5 : 1 to 2.0 : 1 in acetone alone or in a sludge consisting of silica gel or $Al_2O_3$ in acetone,

(b) removing the acetone solvent and evaporating the solvent residues.

7. Process as defined in claim 1, wherein the solid adduct compounds used are obtained by

(a) dissolving a prefabricated solid crown ether heteropoly acid and salt, respectively, (3 : 1) adduct in acetone alone or in a sludge consisting of silica gel or $Al_2O_3$ in acetone,

(b) adding heteropoly acid and salt, respectively, up to a total molar ratio of crown ether to heteropoly acid and salt, respectively, in the range of 0.5 : 1 to 2.0 : 1 in the solution and sludge, respectively,

(c) removing the acetone solvent and evaporating the solvent residue.

## Revendications

1. Procédé pour séparer des ions césium de solutions aqueuses, en utilisant un composé d'addition, sous la forme solide, qui est constitué d'un éther-couronne et d'un hétéropolyacide minéral dans un milieu fortement acide et oxydant, procédé caractérisé en ce que, comme composés d'addition, on utilise ceux que peuvent donner les:

benzo-15-couronne-5 (B-15-C-5) ou
dibenzo-21-couronne (DB-21-C-7) ou
dibenzo-30-couronne-10 (DB-30-C-10), avec les
acide 12- molybdato phosphorique (HPMo), ou
acide 12-tungstatophosphorique (HPW) ou
acide 12-molybdatosilicique (HSiMo) ou
acide 12-tungstatosilicique (HSiW), ou
leurs sels de Na-, K-, Tl-, ou NH4-,

étant entendu que, si l'on utilise des composés d'addition de benzo-15-couronne-5 avec un hétéropolyacide ou un sel d'hétéropolyacide, le rapport molaire entre le benzo-15-couronne-5 et l'hétéropolyacide ou son sel est de 0,5 : 1 à 2 : 1.

2. Procédé suivant la revendication 1, caractérisé en ce que les composés d'addition se présentent sous la forme d'une phase solide d'échangeur d'ions déposé sur un gel de silice poreux ou un oxyde d'aluminium poreux.

3. Procédé suivant la revendication 1, caractérisé en ce que la solution aqueuse contenant les ions césium est mise en contact avec le composé d'addition solide, la phase solide se chargeant des ions césium, et la solution aqueuse exempte d'ions césium, ou ne contenant plus que de faibles quantités de césium étant séparée de la phase solide.

4. Procédé suivant la revendication 2, caractérisé en ce que la solution aqueuse contenant des ions césium est mise en contact avec la phase solide échangeuse d'ions du gel de silice ou de l'$Al_2O_3$, la phase solide se chargeant d'ions césium, et la solution aqueuse exempte de césium, ou n'en contenant plus que de faibles proportions étant séparée de la phase solide.

5. Procédé suivant la revendication 1, caractérisé en ce que les composés d'addition solides présentent un rapport moléculaire entre l'éther-couronne et l'hétéropolyacide ou le sel d'hétéropolyacide de l'ordre de 0,5 : 1 à 2 : 1.

9

6. Procédé suivant la revendication 5, caractérisé en ce que et que comme composés d'addition solides, dans le champ de composition indiqué, on utilise des produits qui ont été obtenus en

a) dissolvant les composants séparés dans un rapport molaire éther couronne/hétéropolyacide ou son sel de l'ordre de 0,5 : 1 à 2 : 1, dans l'acétone seul, ou dans une suspension de gel de silice ou $Al_2O_3$ dans l'acétone,

b) éliminant l'acétone solvant et évaporant les restes de solvant.

7. Procédé suivant la revendication 1, caractérisé en ce que comme composés d'addition solides, on utilise ceux que l'on obtient en:

a) dissolvant un produit d'addition (3 : 1) préparé au préalable, solide, d'éther-couronne et d'hétéropolyacide ou d'un sel de cet acide, dans l'acétone seul, ou dans une suspension de gel de silice ou d'$Al_2O_3$ dans l'acétone,

b) ajoutant de l'hétéropolyacide ou son sel, jusqu'à obtenir un rapport molaire total éther-couronnehétéropolyacide ou son sel de l'ordre de 0,5 : 1 à 2 : 1 dans la solution ou la suspension,

c) éliminant le solvant acétone et évaporant les restes de solvant.